## Europäisches Patentamt
## European Patent Office
## Office européen des brevets

(11) Numéro de publication : **0 013 526**
**B1**

(12) **FASCICULE DE BREVET EUROPÉEN**

(45) Date de publication du fascicule du brevet :
13.10.82

(51) Int. Cl.³ : **F 16 K 27/00// G21C19/04**

(21) Numéro de dépôt : 79401068.6

(22) Date de dépôt : 26.12.79

(54) Robinet démontable à distance.

(30) Priorité : 03.01.79 FR 7900097
26.10.79 FR 7926686

(43) Date de publication de la demande :
23.07.80 (Bulletin 80/15)

(45) Mention de la délivrance du brevet :
13.10.82 Bulletin 82/41

(84) Etats contractants désignés :
BE CH DE GB IT LU NL SE

(56) Documents cités :
FR A 1 507 204
FR A 1 566 996

(73) Titulaire : **SOCIETE GENERALE POUR LES TECHNI-
QUES NOUVELLES S.G.N. Société anonyme dite:
"LES QUADRANTS" avenue du Centre, 7
Montigny Le Bretonneux (Yvelines) (FR)**

(72) Inventeur : **Tucoulat, Daniel
2 rue du Professeur Calmette
F-95530 La Frette S/Seine (FR)**

(74) Mandataire : **de Haas, Michel et al
Cabinet Beau de Loménie 55 rue d'Amsterdam
F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Imprimerie Jouve, 18, rue St-Denis, 75001 Paris, France

Robinet démontable à distance

La présente invention décrit un robinet ou vanne démontable à distance.

Pour les installations nucléaires traitant des fluides fortement radio-actifs et très toxiques par exemple pour le retraitement des combustibles irradiés, tout l'appareillage est entouré d'écrans de protection qui arrêtent les rayonnements et empêchent la dissémination de gaz d'aérosol radio-actifs et toxiques dans la zone de travail où séjourne le personnel. De plus, pour faciliter les interventions d'entretien de cet appareillage en cellule, les équipements doivent présenter un volume mort de rétention nul ou aussi faible que possible, et des précautions sont prises en vue de limiter le plus possible la contamination des parois externes des appareils qu'elle contient. L'appareillage et en particulier les réservoirs sont, par exemple, entièrement fermés et leurs évents sont reliés par des tuyauteries étanches à des installations de contrôle et de traitement des effluents gazeux et, pour supprimer les risques de fuite, on n'admet en règle générale aucun assemblage par brides.

Les niveaux de radio-activité ou de toxicité atteints interdisent même souvent toute approche de l'appareillage pour des interventions d'entretien en cellule. Les organes sensibles, tels que les robinets, les pompes, ou leurs composants sujets à usure en service, doivent alors être démontés ou mis en place à distance, et extraits de la cellule ou introduits dans celle-ci au moyen d'enceintes mobiles d'intervention, parfois appelées « châteaux de plomb », qui assurent la permanence de la protection biologique du personnel.

Le brevet FR-A-1 344 957, son addition FR-E-88 688 et la demande de brevet FR-A-2 361 558 décrivent une pompe centrifuge auto-amorçante spécialement conçue en fonction de ces impératifs.

De plus on a décrit, dans le brevet FR-A-1 507 204, les dispositifs permettant, d'une part, la commande à distance d'une vanne pour fluides et, d'autre part, le démontage de cette vanne afin de l'extraire — en vue de réparations par exemple — d'une enceinte dans laquelle elle est disposée. Le dispositif préconisé dans ledit brevet FR-A-1 507 204 consiste à désaccoupler l'ensemble de la vanne d'avec les tuyauteries d'amenée et de départ du fluide, de façon à pouvoir sortir, hors de l'enceinte, la vanne dans son ensemble (corps et l'ensemble du dispositif d'obturation...).

Le robinet selon la présente invention est caractérisé en ce que le corps dudit robinet est soudé à demeure sur les tuyauteries dans lesquelles circule le fluide dangereux éliminant ainsi toute liaison par joints du robinet aux tuyauteries, que l'ensemble du dispositif d'obturation dudit robinet constitué par un précorps et ses accessoires est démontable à distance par traction sur une tige qui peut extraire de l'enceinte radioactive ledit ensemble pour l'amener dans un « château de plomb ».

L'ensemble du dispositif d'obturation est généralement composé de quatre parties :
— un bouchon d'obturation,
— un précorps fixe ou statique, de forme extérieure tronconique, coopérant extérieurement avec l'intérieur du corps de vanne et intérieurement avec la partie mobile du dispositif d'obturation,
— une ou plusieurs entretoises fixes ou statiques, la partie haute de l'entretoise supérieure coopérant avec la surface inférieure du bouchon fermant l'ouverture pratiquée dans l'enceinte radio-active,
— un obturateur mobile coopérant avec le précorps.

L'invention est applicable notamment dans le cas de robinets dans lesquels le déplacement de l'obturateur mobile s'effectue par translation (robinets à soupape ou à piston), dans le cas de robinets dans lesquels le déplacement de l'obturateur s'effectue par rotation (robinet à papillon ou à boisseau) et dans le cas de robinets dans lesquels le déplacement de l'obturateur s'effectue par la combinaison d'une rotation et d'une translation.

Les robinets selon l'invention nécessitent en général que le corps du robinet soit convenablement positionné par rapport à l'ouverture pratiquée dans l'enceinte. Ce dispositif de positionnement du corps du robinet est avantageusement constitué par un fourreau de positionnement qui est soudé au corps de vanne, qui s'insère dans ladite ouverture de l'enceinte et qui repose généralement sur un épaulement convenablement ménagé dans ladite ouverture.

Ainsi le corps du robinet (ou vanne) sera soudé à la tuyauterie dans laquelle devra circuler le fluide-liquide ou gaz-dangereux ; ce corps sera constitué par un siège de forme tronconique, à axe vertical évasé vers le haut et dont l'angle est supérieur à l'angle de coincement du cône. Ce corps sera positionné au-dessous de l'ouverture ménagée dans l'enceinte de protection et ce positionnement sera avantageusement obtenu grâce à un fourreau entrant dans ladite ouverture et reposant sur un épaulement de cette ouverture.

Les exemples non limitatifs suivants illustrent l'invention.

Ces exemples sont représentés en coupe sur les fig. 1 à 3. La fig. 1 correspond à un robinet à soupape, les fig. 2 et 3 à une vanne papillon.

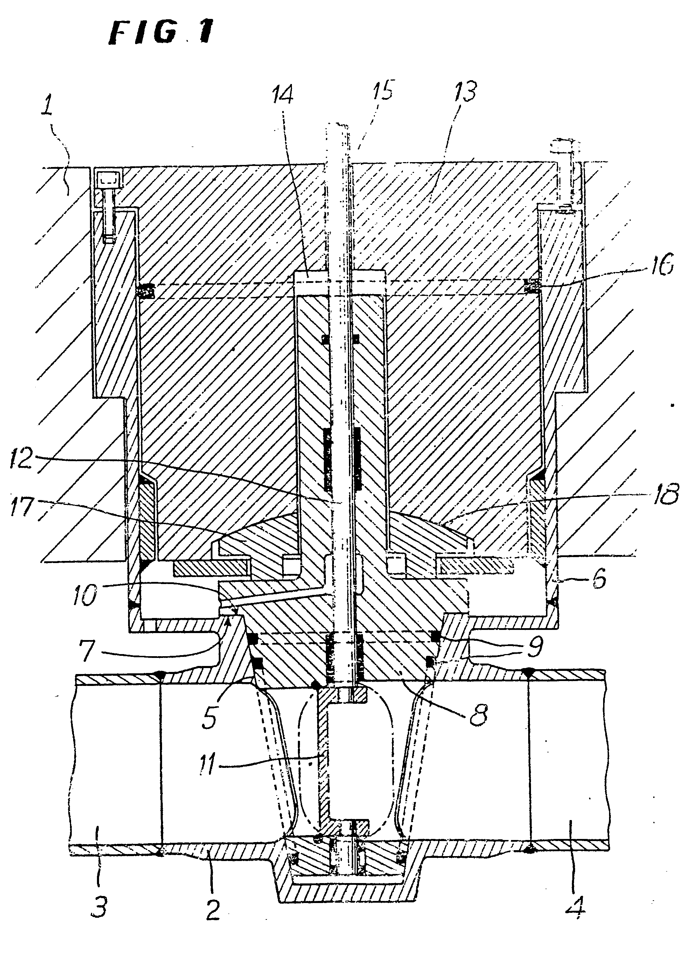

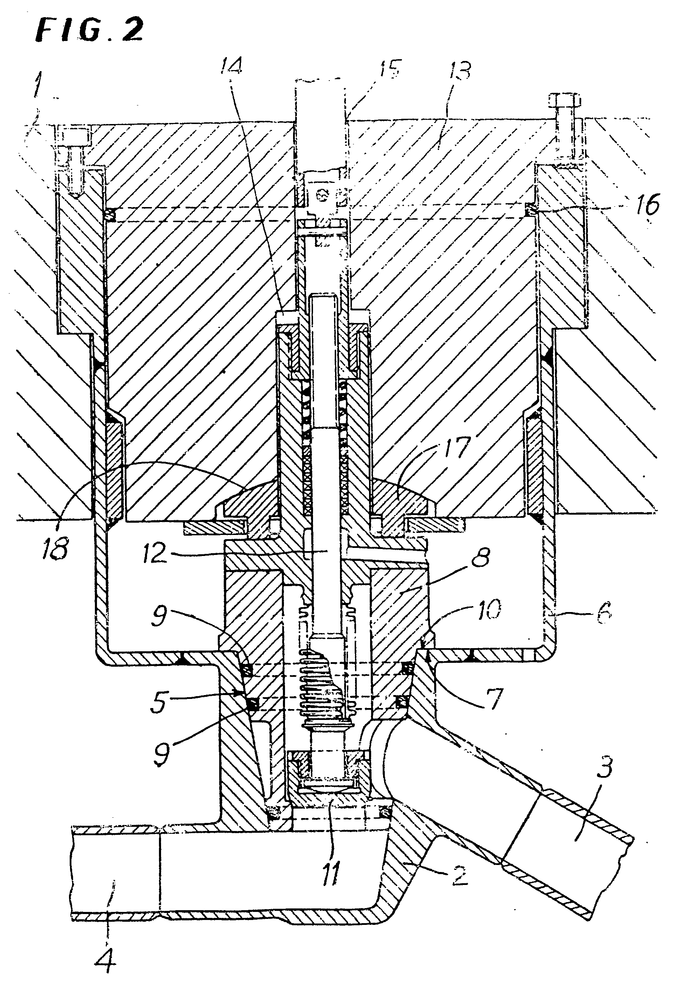

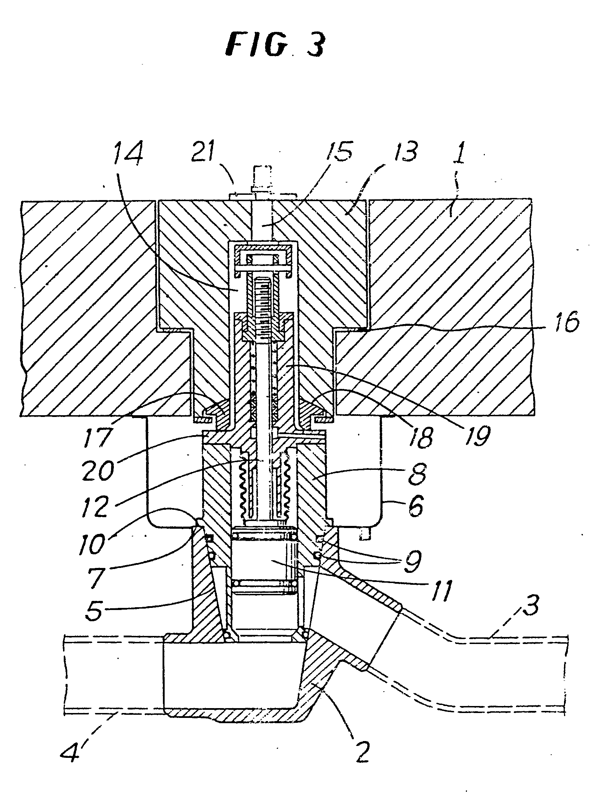

Sur ces figures, ont été représentés :
en 1, la paroi supérieure (1) de l'enceinte biologique dans laquelle se trouve situé le robinet (ou vanne) selon l'invention ;
en 2, le corps du robinet ; comme représenté, le siège de ce corps de robinet est situé immédiatement au-dessous d'une ouverture ménagée dans le plafond de l'enceinte biologique ;
ce corps de robinet est soudé aux tuyauteries 3 et 4 dans lesquelles circule le fluide — liquide ou gaz — dangereux ; ce corps présente un siège 5 tronconique d'axe vertical ouvert vers le haut ; sur le corps de robinet, on a soudé un fourreau 6 destiné à positionner ce corps par rapport à l'ouverture ménagée dans le plafond de l'enceinte ; le corps du robinet présente à sa partie supérieure une surface du butée 7. Sur les fig. 1 et 2 le fourreau 6 est choisi de façon à pouvoir s'insérer dans l'ouverture pratiquée dans l'enceinte et présente à sa partie supérieure une partie élargie venant en appui sur un épaulement ménagé dans ladite ouverture. Sur la fig. 3 ce fourreau 6 est constitué par une sorte de bol qui vient s'appliquer contre la face inférieure de l'enceinte ;

en 8, un précorps dont la partie inférieure externe est de forme tronconique convenable pour coopérer avec le tronc de cône du siège du corps du robinet ; cette partie inférieure du précorps est munie de joints 9 solidaires dudit précorps lors du démontage ; dans le cas d'une vanne papillon, l'un des joints 9 sera de préférence disposé autour des tuyauteries d'amenée et de départ du fluide et l'autre joint disposé autour dudit précorps par rapport à l'axe vertical de celui-ci ; à la partie supérieure de cette portée tronconique, le précorps comporte sur son pourtour une surface de butée 10 qui vient s'appuyer sur la surface de butée 7 du corps de robinet, tout en permettant aux joints 9 de réaliser l'étanchéité souhaitée ;

en 11, un obturateur soit du type tournant (papillon pour la fig. 1) soit du type à translation (fig. 2 et fig. 3) ; l'obturateur est muni, à sa partie supérieure, d'une tige 12 permettant la commande dudit obturateur et étant prolongée jusque vers l'extérieur de l'enceinte par un prolongateur pouvant présenter des articulations ;

en 13, un bouchon pesant ayant en son axe un logement 14 et un passage 15 pour le prolongement de la tige de l'obturateur ; ce bouchon obture l'ouverture pratiquée dans l'enceinte biologique avec l'aide de joints tels que 16 (joints coopérant soit avec l'enceinte elle-même, soit avec le fourreau 6) ;

en 17, une entretoise présentant une surface extérieure 18 ayant la forme d'une calotte sphérique qui coopère avec une surface sphérique correspondante ménagée dans la partie basse du bouchon 13 (autour de la partie inférieure du logement central 14) ; cette calotte sphérique permet au bouchon d'assurer une pression convenable sur le précorps et ceci même si l'axe dudit bouchon n'est pas dans le prolongement exact de l'axe du corps ou du précorps.

On notera enfin l'existence :

— d'une part, partout où cela sera nécessaire, de joints et de presse-étoupe permettant d'assurer les étanchéités nécessaires ;

— d'autre part, de canaux permettant d'évacuer si nécessaire les fuites éventuelles et les égouttures qui peuvent se produire, soit au cours du fonctionnement, soit au cours du démontage du précorps.

Dans les robinets selon l'invention le bouchon pesant agissant par son propre poids et/ou par une pression extérieure contrôlée, amène, par l'intermédiaire de l'entretoise et du fourreau, la surface de butée du précorps en contact avec la surface de butée du corps de robinet ce qui conduit à un écrasement contrôlé des joints portés par la partie inférieure externe du précorps contre le siège du corps de robinet. Dans cette position le robinet est prêt à fonctionner, son ouverture et sa fermeture étant réalisées par un mouvement convenable de l'obturateur obtenu par action sur l'extrémité de la tige sortant hors du bouchon. Lorsque le robinet doit être démonté, une traction sur le bouchon provoque l'entraînement vers l'extérieur de l'ensemble du dispositif d'obturation formé par le précorps, l'obturateur mobile, le bouchon et l'entretoise ou les entretoises.

**Revendications**

1. Robinet pour fluides radio-actifs ou toxiques démontable à distance et situé à l'intérieur d'une enceinte biologique dont la paroi supérieure (1) est pourvue d'une ouverture dans laquelle est placé un bouchon pesant (13), ledit robinet étant constitué par un corps (2) de robinet et un obturateur (11) mobile dont les mouvements peuvent être contrôlés par une tige (12) éventuellement pourvue d'un prolongateur permettant ledit contrôle à partir de l'extérieur de ladite enceinte, ledit robinet étant caractérisé en ce que :

— le corps de robinet (2) soudé à la tuyauterie présente un siège (5) de forme tronconique d'axe vertical, évasé vers le haut et disposé immédiatement au-dessous d'une ouverture ménagée dans la paroi (1) de l'enceinte biologique, des moyens pour positionner exactement ledit corps (2) par rapport à ladite ouverture,

— un précorps présente une partie inférieure externe de forme tronconique s'adaptant sur ledit siège (5) et munie de joints (9) au sommet de laquelle se trouve une surface de butée (10) s'appuyant sur une face supérieure de butée (7) ménagée sur ledit corps de robinet (2),

— le bouchon pesant (13) comporte autour de son axe un logement (14) et un passage (15) pour ladite tige (12) ou ledit prolongateur, ledit bouchon (13) obstruant l'ouverture pratiquée dans la paroi (1) de l'enceinte biologique et rendu solidaire du précorps (8) par une ou plusieurs entretoises (17) fixes ou statiques, la partie haute de l'entretoise supérieure coopérant avec la surface inférieure dudit bouchon (13).

2. Robinet selon la revendication 1, caractérisé en ce que ladite entretoise supérieure (17) présente une surface supérieure en forme de calotte sphérique, surface sur laquelle appuie la surface également sphérique de la face inférieure dudit bouchon (13).

3. Robinet selon l'une des revendications 1 et 2, caractérisé en ce que le positionnement du précorps (8) par rapport à l'ouverture de l'enceinte biologique est réalisé à l'aide d'un fourreau (6) soudé audit corps (2), entrant dans ladite ouverture et s'appuyant à sa partie supérieure sur un épaulement ménagé dans ladite ouverture.

## Claims

1. Remotely dismountable valve for radioactive or toxic fluids, situated inside a biological enclosure if which the upper wall (1) is provided with an opening in which in placed a heavy stopper (13), the said valve being constituted by a valve body (2) and a movable obturator (11) the movements of which can be controlled by a rod (12) which rod can be provided with an extension permitting the said control from outside the said enclosure, said valve being characterised in that :
— the valve body (2) welded to the pipe is provided with a truncated seat (5) of vertical axis, said seat widening upwardly and being placed immediately below an opening provided in the wall (1) of the biological enclosure, and with means for accurately positioning the said body (2) with respect to the said opening,
— a member presents an outer lower part of truncated shape fitting on the said seat (5) and provided with seals (9) at the top of which is situated a stop surface (10) abutting the upper stop face (7) provided on the said valve body (2),
— the heavy stopper (13) is provided around its axis with a housing (13) and a passage (15) for the said rod (12) or the said extension, the said stopper (13) stopping the opening made in the wall (1) of the biological enclosure and being secured to the member (8) by one or more fixed or static cross-pieces (17), the upper part of the upper cross-piece cooperating with the lower surface of the said stopper (13).

2. Valve according to claim 1, characterised in that the said upper cross-piece (17) presents an upper face shaped as a spherical cap, on which surface rests the likewise spherical surface of the lower face od the said stopper (13).

3. Valve according to any one of claims 1 and 2, characterised in that the positioning of the member (8) with respect to the opening of the biological enclosure is achieved by means of a sleeve (6) welded to the said body (2), and resting at its upper part on a shoulder provided in the said opening.

## Ansprüche

1. Hahn für radioaktive oder giftige Fluide, welcher aus Entfernung ausbaudar und innerhalb einer biologischen Einfassung angeordnet ist, deren obere Wand (1) mit einer Öffnung versehen ist, in welcher ein schwerer Stöpsel (13) eingesetzt ist, wobei der Hahn durch einen Hahnkörper (2) und eine bewegliche Verschließeinrichtung (11) gebildet ist, deren Bewegungen durch eine, gegebenenfalls mit einer Verlängerung zur Steuerung von außerhalb der Einfassung versehenen Welle (12) steuerbar sind, welcher Hahn dadurch gekennzeichnet ist :
— daß der an die Rohrleitung angeschweißte Hahnkörper (2) einen von der Vertikalachse kegelstumpfförmigen Sitz (5) aufweist, der nach oben zu erweitert und unmittelbar unter einer in der Wand (1) der biologischen Einfassung vorgesehenen Öffnung angeordnet ist, sowie eine Einrichtung zur exakten Positionierung des Körpers (2) gegenüber der Öffnung,
— daß ein Vorkörper einen äußeren, auf den Sitz (5) passenden und mit Dichtungen (9) versehenen Unterteil von kegelstumpfförmiger Gestalt aufweist, auf dessen Scheitel sich eine Anschlagfläche (10) befindet, die sich auf einer auf dem Hahnkörper (2) angeordneten, oberen Anschlagfläche (7) abstützt,
— daß der schwere Stöpsel (13) um seine Achse eine Aufnahme (14) und einen Durchlaß (15) für die Welle (12) bzw. die Verlängerung aufweist, welcher Stöpsel (13) die in der Wand (1) der biologischen Einfassung angelegte Öffnung verschließt und mit dem Vorkörper (8) über ein oder mehrere fixe oder statische Zwischenstücke (17) verbunden ist, wobei der Oberteil des oberen Zwischenstücks mit der unteren Oberfläche des Stöpsels (13) zusammenwirkt.

2. Hahn nach Anspruch 1, dadurch gekennzeichnet, daß das obere Zwischenstück (17) eine kugelkalottenförmige Oberseite aufweist, auf welcher sich die ebenfalls kugelförmige Fläche der Unterseite des Stöpsels (13) abstützt.

3. Hahn nach einem der Ansprüche 1 und 2, dadurch gekennzeichnet, daß die Positionierung des Vorkörpers (8) gegenüber der Öffnung der biologischen Einfassung mit Hilfe einer an den Körper (2) geschweißten Gleithülse (6) erfolgt, die in die Öffnung eintritt und sich mit ihrem oberen Teil auf einer in der Öffnung vorgesehenen Schulter abstützt.

FIG .1

0 013 526

1

**FIG.2**

# FIG. 3